# DEMANDE DE BREVET EUROPEEN

(11) **EP 1 222 846 A1**
(43) Date de publication de la demande: **17.07.2002**
(21) Numéro de dépôt: 02290087.2
(22) Date de dépôt: 14.01.2002
(51) Int. Cl.: A01C 11/02

(54) **Machine de plantation de plants en mottes, à cadence élevée**

(30) Priorité: 15.01.2001 FR 0100456
(71) Demandeur: Regero, 44334 Nantes Cedex 03 (FR)
(72) Inventeur: Pinson, Dominique, 44000 Nantes (FR)
(74) Mandataire: Michelet, Alain

(57) **Abrégé**

La machine de plantation comporte un couloir (3) d'amenée des mottes, à l'extrémité aval duquel la première motte est prise en charge par des bras (11). Un dispositif de séparation est disposé à l'extrémité du couloir (3) pour agir au niveau de la deuxième motte, alors que la troisième motte est retenue par les parois latérales dudit couloir. Ce dispositif de séparation (20), ou twisteur, imprime un mouvement de torsion à la deuxième motte par rapport à la troisième motte, de façon à les séparer, en supprimant les adhérences et/ou en déchirant les radicelles qui poussent d'une motte à l'autre.

## Description

La présente invention concerne un perfectionnement aux machines de plantation de plants en mottes, qui fonctionnent à des cadences élevées.

Elle concerne plus particulièrement un perfectionnement à la machine décrite dans le document EP-0 475 839 de la demanderesse.

Les mottes sont constituées d'un substrat approprié du genre terreau, compacté. Elles se présentent sous la forme de petits cubes dont les dimensions sont de l'ordre de 3 à 5 cm.

Les plants se développent dans les mottes à partir d'une graine qui a été disposée au coeur et, selon la nature des plants, et aussi selon les conditions dans lesquelles ils se sont développés, il peut y avoir entre les mottes adjacentes, des adhérences et même une certaine cohésion due à la présence de radicelles qui traversent les parois et se développent dans la ou les mottes adjacentes.

Ces adhérences et cohésions sont une source de ratés et d'incidents notamment sur les machines qui fonctionnent à des cadences élevées.

La présente invention propose des moyens qui permettent de diminuer ces risques d'incidents.

La machine selon l'invention comporte - un couloir d'amenée pour une rangée de mottes, ce couloir étant incliné vers le sol en allant de l'amont vers l'aval, - des moyens d'obturation de l'extrémité dudit couloir, au niveau du sol, pour retenir les mottes, - des moyens de prise en charge et de mise en terre de la première motte située à l'extrémité aval du couloir, - des moyens pour retenir les autres mottes lors de l'enlèvement de ladite première motte, lesquels moyens consistent en un serrage de l'une au moins desdites mottes, sur leur flanc, - des moyens de commande et de synchronisation des différents mouvements, laquelle machine comporte en plus un dispositif de séparation des mottes entre elles à l'extrémité du couloir, et en particulier des moyens qui permettent de séparer la deuxième motte par rapport à la troisième motte qui est retenue pendant cette opération dans le couloir, pincée sur ses flancs entre les parois latérales dudit couloir, lequel dispositif imprime un mouvement de torsion à la deuxième motte par rapport à ladite troisième motte.

Toujours selon l'invention, le dispositif de séparation de la deuxième motte, par rapport à la troisième motte, consiste en une sorte d'étrier, muni à l'extrémité de chacune de ses branches, de vérins pour manoeuvrer des pinces , lequel étrier est monté sur un axe perpendiculaire à la sole du couloir dans lequel évoluent les mottes, et il est mobile sur cet axe, manoeuvré par un organe approprié du genre vérin, pour réaliser un mouvement alternatif de torsion de ladite deuxième motte, par rapport à la troisième motte retenue par pincement à l'extrémité du couloir.

Toujours selon l'invention, le mouvement de torsion de la deuxième motte s'effectue sur un angle qui est par exemple de l'ordre de 15°.

Selon une autre disposition de l'invention, la course des vérins de manoeuvre des pinces du dispositif de séparation est telle qu'elle permet, en position repos, de libérer un espace suffisant de part et d'autre de la deuxième motte, pour permettre le passage des moyens de mise en terre, lesquels moyens de mise en terre sont constitués de bras souples rayonnants montés sur un arbre moteur.

Selon une autre disposition de l'invention, les différents moyens de commande et de manoeuvre des organes actifs sont constitués de vérins pneumatiques dont le fonctionnement est réglé au moyen d'un automate qui est synchronisé sur le mouvement des bras de mise en terre des mottes.

Selon une autre disposition de l'invention, le couloir comporte dans sa partie amont, un tapis sans fin d'amenée des mottes et ce tapis est doté d'un système d'avance comprenant une roue libre du type à cliquet ou autre, manoeuvrée au moyen d'un vérin avec une fréquence adaptée à la vitesse des bras de mise en terre des mottes.

Selon une autre disposition de l'invention, - le vérin de commande de la butée située à l'extrémité inférieure du couloir, - le ou les vérins de manoeuvre des pinces du dispositif de séparation, - le ou les vérins de manoeuvre des parois latérales du couloir pour pincer et retenir les mottes à partir de la troisième et - le vérin de mise en oeuvre du tapis d'amenée des mottes, sont alimentés à partir d'un même distributeur et fonctionnent simultanément.

Toujours selon l'invention, le système de mise en terre des mottes constitué des bras rayonnants, est monté sur l'arbre moteur par l'intermédiaire d'un dispositif limiteur de couple qui permet, en cas d'incident au niveau de la mise en terre, de stopper tous les organes de commande et de manoeuvre.

L'invention sera encore détaillée à l'aide de la description suivante et des dessins annexés, donnés à titre indicatif, et dans lesquels :
- la figure 1 représente, vus de côté schématiquement, les éléments essentiels de la machine de plantation selon l'invention ;
- la figure 2 représente, schématiquement, vue de dessus, la partie inférieure du couloir d'amenée des mottes, munie du dispositif de séparation de l'avant-dernière motte ;
- la figure 3 représente de façon schématique, le dispositif de séparation, selon un plan transversal passant par l'axe de pivotement de l'étrier ;
- les figures 4A à 4E représentent une décomposition des différentes opérations réalisées par les organes actifs de la machine pour effectuer la mise en terre des mottes.

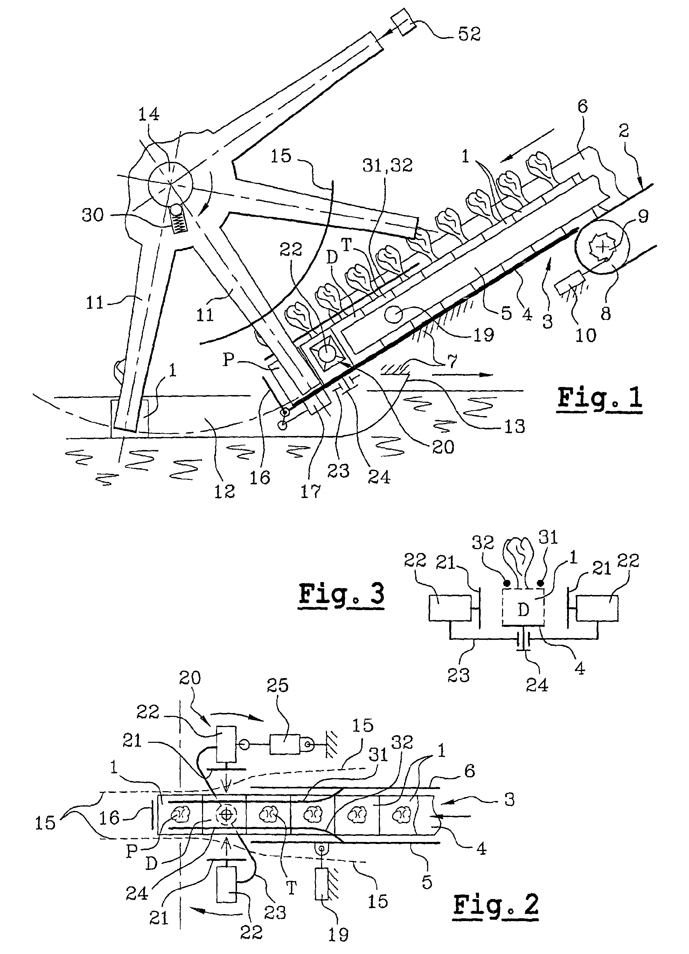

Le système de plantation représenté figure 1, fait partie d'une machine de plantation qui peut comporter un ou plusieurs systèmes de plantation, disposés côte à côte pour planter en quinconce par exemple.

Ce système de plantation permet la mise en terre de mottes 1 qui sont introduites sous forme de rangées, par un tapis transporteur sans fin 2.

La rangée de mottes 1 est disposée dans une sorte de couloir 3 qui est incliné vers le sol, en descente en allant de l'amont vers l'aval. Ce couloir comporte - une sole 4 qui est disposée dans le prolongement du brin supérieur du tapis transporteur 2 et - des parois latérales 5 et 6 visibles également figure 2. L'ensemble est supporté par un bâti général 7.

Le tapis transporteur 2 constitue la partie amont du couloir 3. Il est monté sur une poulie motrice 8 à sa partie inférieure. Cette poulie 8 comporte une roue libre 9 du type à cliquet ou autre qui est entraînée par un vérin 10, dont le fonctionnement sera illustré plus loin en liaison avec la figure 3.

Les mottes sont prises une à une, à l'extrémité inférieure aval du couloir 3 par des bras 11 disposés par couples, formant une sorte de pinces, lesquels bras déposent la motte 1 dans un sillon 12 creusé par un soc 13 situé sous l'extrémité inférieure de la sole 3.

Les bras 11 sont des bras rayonnants montés sur un arbre 14 et ces bras sont guidés dans leur mouvement au moyen de cames 15 disposées de part et d'autre du couloir, lesquelles cames permettent au moment opportun, de resserrer les bras 11 formant pinces, pour capter la première motte P à l'extrémité du couloir 3 et de lâcher cette motte P au moment opportun dans le sillon 12.

L'extrémité aval du couloir 3 est obturée au moyen d'une butée 16 qui est manoeuvrée par un vérin 17. Cette butée 16 permet de retenir la rangée de mottes dans le couloir. Cette butée 16 s'éclipse dès que la première motte P a été prise en charge par un jeu de bras 11.

Lorsque la butée 16 s'éclipse, les autres mottes situées dans le couloir 3 sont retenues au moyen des parois latérales 5 et 6, par pincement de l'une d'entre elles au moins,

La paroi 6 est par exemple une paroi fixe alors que la paroi 5 est, comme représenté figures 1 et 2, manoeuvrée au moyen d'un vérin 19 qui permet de déplacer son extrémité aval pour presser la ou les mottes aval correspondantes, contre la paroi fixe 6 et retenir ainsi la rangée de mottes par pincement.

On remarque sur les figures, que la paroi 5 retient les mottes à partir de la troisième motte T. En effet, entre la première motte P située à l'extrémité aval du couloir et la troisième motte T située à l'extrémité du couloir, la deuxième motte D, située entre les deux, est prise en charge par un dispositif de séparation repéré 20, d'une manière générale.

Ce dispositif de séparation sera dénommé dans la suite de la description par le terme « twisteur », dénomination évocatrice qui illustre les caractéristiques et les fonctions de ce dispositif.

Le twisteur 20 s'interpose entre l'extrémité des parois latérales 5 et 6 du couloir 3 et l'extrémité aval de la sole 4 dudit couloir, où s'effectue la prise en charge de la motte P par les couples de bras 11. Ce twisteur 20 comporte une paire de pinces 21 situéee de part et d'autre du couloir 3, lesquelles pinces 21 sont par exemple manoeuvrées au moyen de vérins 22 auxquels elles sont associées et ces vérins 22 sont portés par un bâti qui se présente sous la forme d'un étrier 23.

Cet étrier 23 est articulé sous la sole 4, sur un axe 24 perpendiculaire à ladite sole. L'étrier 23 est soumis à un mouvement d'oscillation autour de l'axe 4, au moyen d'un vérin 25 interposé entre le bâti 7 de la machine et l'une des branches latérales dudit étrier. L'amplitude angulaire du mouvement oscillant du twisteur est par exemple de 15°. L'axe 24 est situé dans le plan vertical médian de la sole 4 et du couloir 3.

L'intervention du twisteur 20 dans l'opération de plantation, est détaillée plus loin en relation avec la figure 3.

On remarque figure 2 et figure 3, que les pinces 21 du twisteur sont relativement éloignées des faces latérales de la deuxième motte D. En effet, ces pinces sont rétractées et maintenues en position repos à une distance suffisante de la motte D pour permettre le passage des bras 11 entre ladite motte D et lesdites pinces, et permettre à ces pinces d'atteindre la première motte P sans incidents.

Sur la figure 2, on remarque les cames 15 qui permettent de guider les bras 11 afin d'éviter toute interférence avec les pinces 21, lesquels bras glissent sur lesdites cames à distance des mottes, sauf à l'approche de la première motte P où ces pinces 11 se resserrent sur ladite motte P, sous l'effet des profils aménagés sur ces cales.

Les bras 11 sont d'ailleurs solidaires de l'arbre 14 au moyen d'un dispositif de sécurité qui permet en cas d'incident, de libérer lesdits bras 11 par rapport audit arbre moteur 14. Ce dispositif de sécurité est par exemple constitué d'un dispositif limiteur de couple 30 interposé entre les deux.

Des moyens complémentaires de guidage de la deuxième motte D apparaissent figures 1 à 3. ces moyens de guidage sont constitués de tringles 31 et 32, qui sont solidaires des parois latérales 5 et 6, et qui s'étendent jusqu'au niveau de l'emplacement de la première motte P. Ces tringles 31 et 32 réalisent un guidage et un maintien de la deuxième motte D et de la troisième motte T, lorsqu'elles se déplacent vers l'extrémité du couloir. Ce guidage s'effectue au niveau de la partie feuillue du plant, au-dessus des mottes proprement dit.

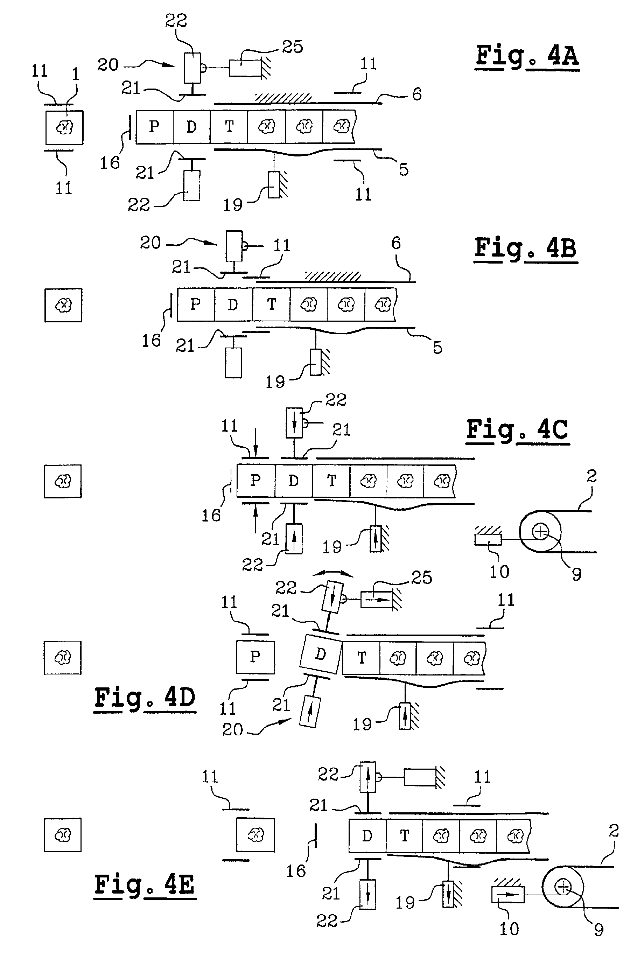

Les figures 4A à 4E illustrent les différentes étapes d'un cycle permettant la mise en terre d'une motte.

L'étape 4A constitue le point de départ du cycle et de l'automate de gestion du cycle en question. On remarque au niveau de l'étape 4A, une motte 1 déjà mise en terre et lâchée par le couple de bras 11 alors qu'un autre couple de bras 11 apparaît, bien en amont de l'extrémité du couloir, de part et d'autre de ce couloir.

Cette étape 4A correspond à celle où les mottes sont immobilisées sur la butée d'extrémité 16, simplement guidées dans le couloir 3 et par les tringles 31 et 32 (non représentées).

A cette étape, la paroi 5 du couloir 3 est en position inactive de serrage. Son vérin 10 est en position de repos.

Toujours dans cette étape, les pinces 21 du twisteur 20 et vérins 22 de commande de ces pinces, sont en position repos, libérant l'espace pour le passage des bras 11.

L'étape 4B est une étape intermédiaire qui montre simplement le passage des bras 11 de part et d'autre des mottes et du couloir, entre les pinces 21, avant d'aboutir, comme représenté à l'étape 4C, au niveau de la première motte P.

Au niveau de l'étape 4C, c'est-à-dire lorsque les bras 11 arrivent au niveau de la première motte P et pincent cette motte P sous l'effet des cames 15, l'automate actionne simultanément - le vérin 17 pour escamoter la butée 16, - le vérin 19 de fermeture de la paroi 5 du couloir 3, - les vérins 22 d'actionnement des pinces 21 pour saisir la deuxième motte D, , et - le vérin 10 de manoeuvre du tapis sans fin 2, pour mettre ledit vérin 10 en position repos.

Tous ces organes sont actionnés simultanément au moyen d'un distributeur unique non représenté, qui envoie par exemple de l'air comprimé aux différents vérins.

L'étape 4D illustre l'intervention du twisteur 20. Le twisteur 20 est mis en oeuvre, c'est-à-dire qu'il imprime un mouvement de torsion oscillant à la deuxième motte D, dès que la première motte P, qui est prise en charge par les bras 11, est suffisamment éloignée de cette deuxième motte D. Ce twisteur est mis en oeuvre par le vérin 25 qui fait pivoter son bâti pour effectuer la torsion de la deuxième motte D par rapport à la troisième motte T, laquelle troisième motte T est retenue à l'extrémité du couloir 3, pincée entre la paroi 5 et la paroi 6, sous l'effet du vérin 19.

Le mouvement du twisteur 20 est un mouvement aller et retour rapide qui permet de réaliser une fracture et de séparer les mottes D et T, en brisant par exemple les radicelles qui s'étendent d'une motte à l'autre.

L'étape 4E montre la fin de l'opération de séparation et de l'intervention du twisteur 20. Au niveau de cette étape 4E, tous les organes actifs de l'étape 4C sont désactivés ou activés selon le cas, simultanément. La butée 16 reprend une position active à l'extrémité du couloir sous l'effet de son vérin 17 ; les pinces 21 du twisteur 20 sont placées en position repos sous l'effet de leur vérin de manoeuvre 22 respectifs ; le vérin 19 qui actionne la paroi latérale 5 remet cette paroi latérale en position inactive et le vérin 10 est activé pour manoeuvrer la roue libre 9, et faire avancer le tapis 2 et les mottes 1 dans le couloir 3, transformant ainsi la deuxième motte D en une première motte P et la troisième motte T en deuxième motte D.

Le cycle reprend ensuite comme détaillé auparavant à partir de l'étape 4A.

Ce système de plantation est particulièrement bien adapté pour des mottes cubiques et pour des plants jeunes du genre laitues, batavias, etc ... et il permet d'atteindre des cadences élevées de l'ordre d'une centaine de mottes mises en terre par minute.

Pour accroître la sécurité de fonctionnement de ce type de machine, les organes actifs du genre vérins, sont mis en oeuvre au moyen d'un automate et cet automate déclenche les différentes opérations en fonction du mouvement des bras 11. Un capteur 52, qui apparaît figure 1, détecte le passage des bras 11 et déclenche le cycle des différentes opérations.

## Revendications

1. Machine de plantation de plants en mottes comportant : - un couloir (3) d'amenée d'une rangée de mottes, incliné vers le sol, en allant de l'amont vers l'aval, - des moyens d'obturation de l'extrémité du couloir (3), au niveau du sol, pour retenir les mottes, en forme de butée (16), - des moyens de prise en charge et de mise en terre de la première motte (P) située à l'extrémité aval dudit couloir, - des moyens pour retenir les autres mottes, notamment lors de l'enlèvement de ladite première motte (P), par pincement de l'une au moins des mottes entre les parois latérales du couloir (3), - des moyens de commande et de synchronisation des différents mouvements, **caractérisée en ce qu'**elle comporte un dispositif de séparation de la deuxième motte (D) par rapport à la troisième motte (T), laquelle troisième motte (T) est retenue pendant cette opération à l'extrémité du couloir (3), lequel dispositif imprime un mouvement de torsion à ladite deuxième motte (D).

2. Machine de plantation selon la revendication 1, **caractérisée en ce que** le dispositif de séparation de la deuxième motte (D) consiste en une paire de pinces (21) manoeuvrées au moyen de vérins (22) par exemple qui sont montés sur une sorte d'étrier (23), lequel étrier est articulé sur un axe situé sous la sole (4) du couloir (3), perpendiculaire à ladite sole (4), et il est mobile sur cet axe, manoeuvré par un organe approprié du genre vérin alternatif (25), pour réaliser le mouvement de torsion de ladite deuxième motte (D), par rapport à la troisième motte (T).

3. Machine de plantation selon la revendication 2, **caractérisée en ce que** l'amplitude du mouvement d'oscillation de la deuxième motte (D) s'effectue sur un angle qui est de l'ordre de 15° environ.

4. Machine de plantation selon l'une quelconque des revendications 2 ou 3, **caractérisée en ce que** la course des vérins (22) servant à manoeuvrer les pinces (21), est telle qu'elle permet en position repos, de libérer un espace suffisant entre lesdites pinces (21) et les faces de la deuxième motte (D), pour permettre le passage des moyens de mise en terre, et en particulier des couples de bras rayonnants (11) chargés de cette opération de mise en terre.

5. Machine de plantation selon l'une quelconque des revendications 1 à 4, **caractérisée en ce que** les différents moyens de commande et de manoeuvre sont constitués de vérins pneumatiques dont la mise en oeuvre est réalisée au moyen d'un automate, lequel automate est synchronisé sur le mouvement des bras (11) du système de mise en terre des mottes.

6. Machine de plantation selon l'une quelconque des revendications 1 à 5, **caractérisée en ce qu'**elle comporte un tapis sans fin d'amenée des mottes, constituant la partie amont du couloir (3), lequel tapis (2) comporte une roue à rochets (9), manoeuvrée de façon séquentielle, au moyen d'un vérin (10).

7. Machine de plantation selon la revendication 6, **caractérisée en ce que** les différents vérins de manoeuvre des organes tels que la butée (16) à l'extrémité du couloir (3), les pinces (21) du système de séparation, la paroi (5) dudit couloir (3) et le vérin (10) pour l'avance du tapis (2), sont alimentés au moyen d'un seul et même distributeur qui permet une activation et/ou désactivation simultanée desdits vérins.

8. Machine de plantation selon l'une quelconque des revendications 1 à 7, **caractérisée en ce qu'**elle comporte, entre les bras (11) et l'arbre moteur (14) sur lequel ils sont montés, un dispositif limiteur de couple (30).

9. Machine de plantation selon l'une quelconque des revendications 1 à 8, **caractérisée en ce qu'**elle comporte, à l'extrémité aval du couloir (3), des guides en forme de tringles (31, 32), disposés au-dessus des mottes (1), au niveau du feuillage desdites mottes, lesquels guides sont solidaires des parois latérales (5) et (6) dudit couloir (3).
